# FASCICULE DE BREVET EUROPEEN

(11) **EP 1 654 939 B1**
(45) Date de publication et mention de la délivrance du brevet: **30.12.2009**
(21) Numéro de dépôt: 05300809.0
(22) Date de dépôt: 11.10.2005
(51) Int. Cl.: A23N 12/02

(54) **Procédé de traitement en continu de lots de salades prélavées avant leur conditionnement ainsi qu'installation adaptée à la mise en oeuvre de ce procédé**
Verfahren zur kontinuierlichen Aufbereitung von Salaten, die vor der Verpackung gewaschen werden und zur Durchführung dieses Verfahrens geeignete Anlage
A process and a plant for continuous treatment of salads being washed before conditioning

(30) Priorité: 04.11.2004 FR 0452523
(43) Date de publication de la demande: 10.05.2006
(73) Titulaire: FLORETTE, 50430 Lessay (FR)
(72) Inventeur: Savary, Laurent, 50430 Angoville sur Ay (FR)
(74) Mandataire: Livet, Marie-José

(56) Documents cités:
- FR-A- 2 626 742
- FR-A- 2 852 492
- PATENT ABSTRACTS OF JAPAN vol. 1998, no. 10, 31 août 1998 (1998-08-31) & JP 10 136957 A (MATOBA AKIJI), 26 mai 1998 (1998-05-26)

## Description

La présente invention a pour objet une installation et un procédé de traitement en continu de lots de salades prélavées avant leur conditionnement en particulier dans des sachets destinés à être présentés au rayon frais des magasins.

Il est à noter que dans le cadre de cette description, le terme « salades » doit être compris dans un sens très général et peut désigner tous types de salades (scarole, frisée, laitue, mâche...) mais également d'autres végétaux frais râpés ou coupés, notamment céleri, carotte, chou...

Le seul procédé de conservation des légumes ou des fruits frais a pendant longtemps été l'appertisation qui présente l'inconvénient de dénaturer le goût des aliments.

Plus récemment, les spécialistes des industries agro-alimentaires ont développé des procédés de congélation qui présentent l'avantage de préserver tant l'aspect que les qualités organoleptiques des denrées alimentaires.

Cependant, ces procédés ne sont pas adaptables à tous les aliments, et beaucoup, en particulier les salades, ne peuvent pas être congelés.

Par suite, les spécialistes ont cherché à proposer des moyens permettant de présenter des produits inaptes à la congélation sous une forme prête à l'emploi ayant une durée de conservation augmentée.

On a ainsi vu apparaître sur le marché les produits dits de « quatrième gamme » qui ont immédiatement eu la faveur des consommateurs.

De tels produits correspondent à des salades (ou autres végétaux frais râpés ou coupés) conditionnées sous air ou atmosphère modifiée dans des sachets réalisés à partir de films thermoplastiques plus ou moins perméables aux gaz.

Ces sachets sont conservés à des températures de + 2 à + 4°C.

La durée de conservation des produits ainsi conditionnés qui sont des produits vivants est toutefois limitée par le développement inévitable de micro-organismes et également par l'apparition de phénomènes de brunissement au niveau des coupes qui sont de nature à en altérer l'aspect.

Ces phénomènes sont consécutifs au fait que sous l'effet de l'oxydation, les cellules végétales sécrètent des polyphénols et de la polyphénol oxydase qui sont à l'origine de la couleur brune observée.

Par suite et malgré l'utilisation de produits aussi frais que possible et l'observation de conditions d'hygiène optima tant au niveau de l'épluchage, du découpage et du lavage que de l'emballage, la durée de conservation des aliments frais conditionnés en sachets ne peut pas être supérieure à quelques jours.

Pour augmenter cette durée de conservation, on a déjà proposé de traiter les produits à conditionner en sachets, préalablement lavés, dans des bains renfermant des agents désinfectants et antioxydants.

L'agent actif ainsi utilisé est le plus souvent le chlore dont l'efficacité tant désinfectante qu'anti brunissement est bien connue des spécialistes mais qui possède toutefois une image négative vis-à-vis des consommateurs.

Selon le document FR 2852492 A on a en outre proposé de soumettre des salades à conditionner en sachets à un choc thermique en les plongeant dans de l'eau à une température comprise entre 45 et 60°C ; on s'est en effet rendu compte qu'un tel choc thermique permet de renforcer l'action du chlore, donc d'en utiliser des quantités moindres, voire d'utiliser des agents désinfectants et antioxydants totalement exempts de chlore.

Ce phénomène est dû au fait que le choc thermique permet de modifier le métabolisme des cellules végétales en les poussant à sécréter des protéines faisant office de « leurre » pour bloquer la sécrétion de polyphénols et de polyphénol oxydase à l'origine des phénomènes de brunissement.

Dans ce contexte, il serait souhaitable de pouvoir disposer d'une installation et d'un procédé permettant de faire passer des lots de salades dans différents bains après leur prélavage et avant leur conditionnement en vue de leur conservation, ce d'une manière continue ou pour le moins en cinématique continue.

Or, les spécialistes ne disposent pas, à ce jour, de moyen permettant d'aboutir à ce résultat.

La présente invention a pour objet de combler cette lacune en proposant une installation adaptée au traitement de lots de salades ou autres végétaux frais râpés ou coupés, prélavées avant leur conditionnement, en particulier en sachets caractérisée en ce qu' elle comporte :
- une colonne rotative médiane portant un ensemble de bras basculants uniformément répartis sur sa périphérie, s'étendant radialement à partir de celle-ci, et équipés chacun, à leur extrémité libre, d'un support pivotant autour d'un axe essentiellement perpendiculaire à son axe longitudinal et portant un panier perforé essentiellement cylindrique ou conique ayant une ouverture frontale ou latérale destiné à recevoir un lot de salades à traiter, ce panier perforé étant monté à rotation autour de son axe, et
- un ensemble de postes de traitement uniformément répartis selon une disposition annulaire autour de la colonne rotative médiane, au droit des paniers perforés et destinés à être associés chacun à l'un de ces paniers respectifs,
- la colonne rotative médiane étant animée d'un mouvement pas à pas de façon à permettre de transférer en continu chacun des paniers perforés d'un poste de traitement à un autre.

Les paniers peuvent ainsi être déplacés entre différentes positions au cours du traitement des salades.

En particulier suite au pivotement du support associé, chacun des paniers perforé peut être déplacé entre une position de remplissage dans laquelle il est tourné vers le haut son axe étant vertical, une position d'immersion dans laquelle son axe est en position horizontale et une position d'essorage et de vidange dans laquelle il est tourné vers le bas, son axe étant vertical.

Chacun de ces paniers est en outre monté à rotation autour de son axe de façon à pouvoir être entraîné à vitesse variable par un moteur, ce de préférence par l'intermédiaire d'une transmission à poulie.

Il est à noter que des installations de traitement de végétaux sont également connues par les documents JP 10 136 957 A et FR 2 526 742 A.

Toutefois, ces installations ne sont pas équipées d'une série de paniers perforés montés autour d'une colonne rotative et ne permettent pas un traitement en continu des végétaux.

Selon l'invention, le nombre de bras basculants et de paniers perforés est bien entendu égal au nombre de postes de traitement de sorte que, à chaque pas du déplacement de la colonne rotative médiane, chacun des paniers, donc chaque lot de salades soit transféré d'un poste de traitement au poste de traitement suivant.

Selon l'invention, ces postes de traitement comportent en règle générale un poste de remplissage des paniers, une série de postes d'immersion constitués chacun par une cuve renfermant un bain de traitement ou de lavage, au moins un poste d'essorage et un poste de vidange et de nettoyage.

La série de bains de traitement et de lavage comporte quant à elle avantageusement un bain de choc thermique constitué par de l'eau, le cas échéant activée, à une température comprise entre 40 et 60°C et/ou un bain désinfectant constitué par une solution aqueuse renfermant un agent désinfectant de préférence à une température d'environ 15°C et/ou un bain de rinçage et de refroidissement renfermant de l'eau glacée à environ 2 à 4°C.

Bien entendu les bains de traitement ou de lavage des salades peuvent correspondre à ceux décrits dans le document antérieur FR 2852492 A ou à des bains autres.

Le basculement des bras permet de sortir les paniers perforés des cuves d'immersion.

A partir du poste de vidange et de nettoyage, chacun des paniers est transféré au poste de remplissage de sorte que l'installation permette un traitement en continu des différents lots de salades.

Selon l'invention, les cuves d'immersion sont équipées de moyens de mise en circulation du bain de traitement ou de lavage qu'elles renferment ainsi que de filtres.

Il est à noter que bien que les salades soient prélavées, il subsiste souvent dans celles-ci de petites particules légères et d'éventuels grains de sable pouvant sortir par les perforations des paniers pour pénétrer dans les cuves d'immersion.

Les produits légers surnagent et sont écrémés.

Les produits lourds tombent au fond des cuves et sont séparés par filtrage.

Lors du traitement des lots de salades, chaque panier perforé reste environ 15 secondes au droit de chaque poste de traitement, cette durée correspondant au temps minimum nécessaire au chargement d'un panier perforé pour un lot de salades ou à sa vidange.

Vu que pour que le traitement soit efficace, il est nécessaire que les lots de salades restent environ 30 secondes dans chaque bain, il est nécessaire de prévoir deux positions d'arrêt donc deux postes de traitement dans chaque cuve d'immersion.

Bien entendu, la géométrie de ces cuves doit être adaptée à cet impératif.

L'invention concerne également un procédé de traitement en continu de salades ou autres végétaux frais râpés ou coupés, prélavés, avant leur conditionnement, en particulier en sachets, ce dans une installation du type décrit ci-dessous.

Un tel procédé est caractérisé par la succession des étapes suivantes :
- on introduit chaque lot de salades dans un panier perforé essentiellement cylindrique ou conique monté à rotation autour de son axe,
- on plonge successivement le panier perforé ainsi garni dans une série de bains de traitement ou de lavage en le faisant tourner autour de son axe et,
- après avoir sorti le panier perforé du dernier bain de traitement ou de lavage, on essore les salades renfermées dans celui-ci en poursuivant sa rotation avant de les extraire en vue de leur conditionnement.

Selon l'invention, le panier perforé est en règle générale analogue à celui équipant les machines à laver. Sa vitesse de rotation peut quant à elle varier selon les bains.

Comme il a déjà été indiqué, pour obtenir une efficacité suffisante, il est en règle générale nécessaire de plonger le panier perforé rempli de salades dans chacun de ces bains de traitement ou de lavage pendant une durée de 20 à 40 secondes, de préférence de l'ordre de 30 secondes.

Selon l'invention, il est en outre nécessaire de soumettre les salades à une étape d'égouttage avant de transférer le panier perforé d'un bain de traitement ou de lavage à un autre, ce de façon à éviter de transférer trop de liquide de traitement d'un bain à un autre.

Pour effectuer cet égouttage, on relève le panier perforé au-dessus du bain de traitement ou de lavage en poursuivant sa rotation.

Selon une autre caractéristique de l'invention, avant de plonger le panier perforé rempli de salades dans les bains de traitement ou de lavage successifs, on l'oriente de sorte que son axe de rotation soit essentiellement horizontal.

Cette orientation s'est en effet révélée préférable pour obtenir une efficacité optimum.

Pour améliorer cette efficacité, on peut également injecter de l'air dans le panier perforé, ce afin de mieux favoriser le contact entre les salades et le liquide de traitement ou de lavage.

Par ailleurs et selon une caractéristique particulièrement avantageuse de l'invention, on met en oeuvre l'étape d'essorage final des salades en deux temps, à savoir d'une part un premier temps pendant lequel on oriente le panier perforé de sorte que son axe de rotation soit essentiellement vertical et d'autre part un second temps pendant lequel on oriente le panier perforé de sorte que son axe de rotation soit essentiellement horizontal.

Le premier temps permet de mieux amorcer l'essorage en répartissant les salades à la périphérie du panier perforé, ce qui ne serait pas possible si l'essorage se faisait dès le départ autour d'un axe horizontal.

Une telle répartition régulière des salades est en effet nécessaire pour ne pas qu'elles soient abîmées par les chocs ou l'écrasement.

Les caractéristiques de l'installation ainsi que du procédé qui font l'objet de l'invention seront décrites plus en détail en se référant aux dessins non limitatifs annexés dans lesquels :
- la figure 1 est une vue de dessus de l'installation,
- la figure 2 représente un bras basculant équipé d'un panier perforé en position de remplissage,
- la figure 3 représente un bras basculant équipé d'un panier perforé plongé dans une cuve d'immersion,
- la figure 4 représente un bras basculant équipé d'un panier perforé relevé au-dessus d'une cuve d'immersion,
- la figure 5 représente un bras basculant équipé d'un panier perforé en position d'essorage et de vidange.

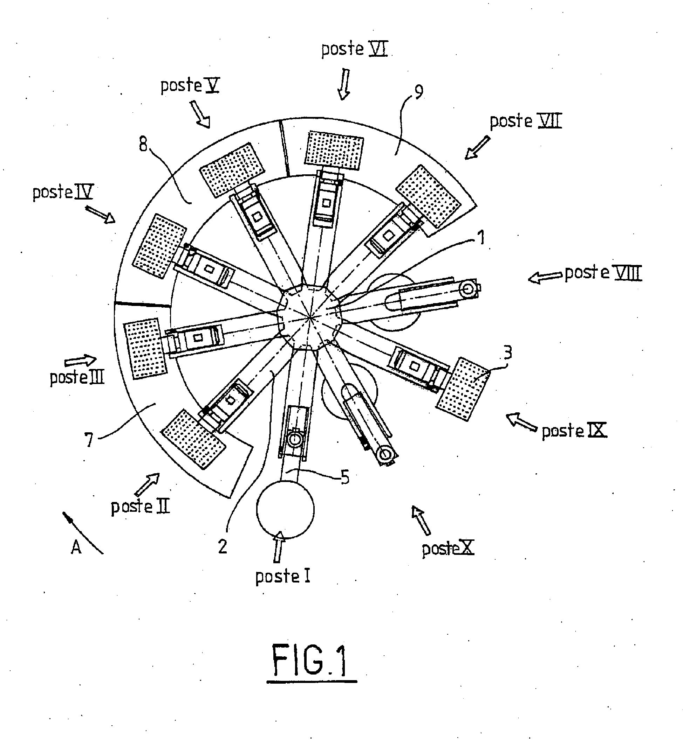

Selon la figure 1, l'installation est essentiellement constituée d'une part par une colonne rotative médiane 1 animée d'un mouvement pas à pas portant dix bras basculants 2 uniformément répartis sur sa périphérie, s'étendant radialement à partir de celle-ci, et équipés chacun d'un panier perforé cylindrique 3 destiné à recevoir un lot de salades à traiter et d'autre part par dix postes de traitement portant les références I à X uniformément répartis selon une disposition annulaire autour de la colonne rotative médiane 1 au droit des paniers perforés 3.

Comme on le verra plus en détail dans la suite de cet exposé, la rotation d'un pas de la colonne rotative médiane 1 dans le sens des aiguilles d'une montre A permet de transférer en continu chacun des paniers perforés respectifs 3 d'un poste de traitement au poste suivant ; au cours de ce mouvement chacun des postes de traitement I à X est associé à un panier 3 respectif.

Plus précisément, et selon les figures 1 à 5, chacun des bras basculants 2 comporte un coudage et est réalisé sous la forme d'une fourche à son extrémité externe. Au niveau de cette fourche un support 5 portant un panier perforé 3 est monté pivotant autour d'un axe 4 perpendiculaire à l'axe longitudinal du bras basculant 2.

Chacun des paniers perforés 3 est équipé d'une ouverture frontale non représentée sur les figures et est entraîné en rotation autour de son axe à une vitesse variable par un moteur 6, ce par l'intermédiaire d'une transmission à poulie non représentée sur les figures.

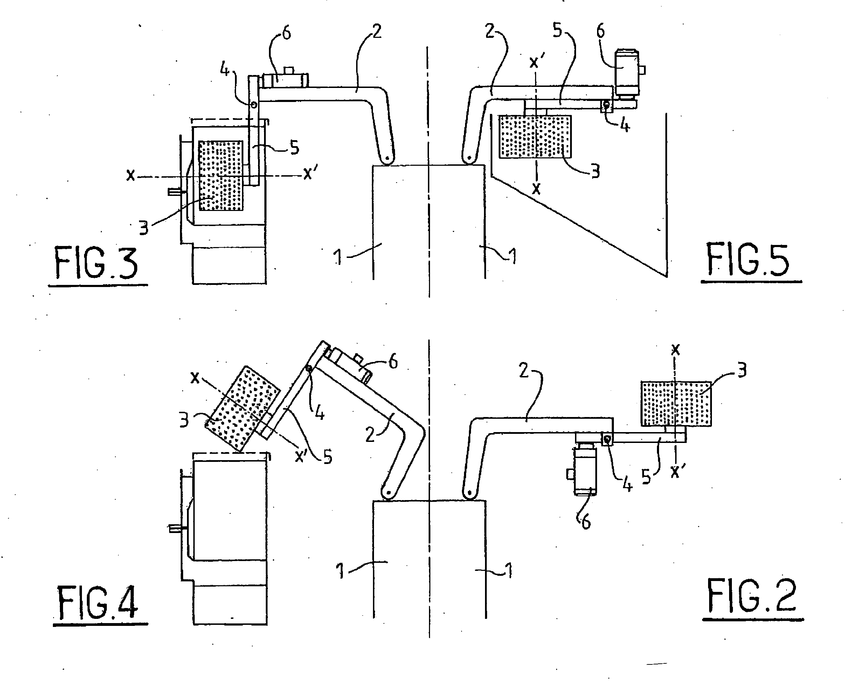

Compte tenu de cette configuration, chacun des paniers perforés 3 peut être déplacé entre :
- une position de remplissage représentée sur la figure 2 dans laquelle son axe xx' est orienté verticalement et l'ouverture frontale est dirigée vers le haut,
- une position de traitement ou de lavage représentée sur la figure 3 dans laquelle son axe xx' est orienté horizontalement,
- une position de transfert représentée sur la figure 4 dans laquelle son axe xx' est orienté obliquement et le bras coudé 2 est basculé par rapport à la colonne rotative médiane 1, et
- une position d'essorage ou de vidange représentée sur la figure 5 dans laquelle son axe xx' est orienté verticalement et l'ouverture frontale est dirigée vers le bas.

Selon la figure 1 :
- Le poste I correspond à un poste de remplissage au niveau duquel on introduit un lot de salades prélavées dans un tambour perforé 3.
- Les postes II et III sont des postes d'immersion dans une cuve d'immersion 7 remplie d'un bain de choc thermique constitué par de l'eau activée à une température comprise entre 45 et 60°C.
- Les postes IV et V sont des postes d'immersion dans une cuve d'immersion 8 remplie d'un bain désinfectant constitué par une solution aqueuse renfermant un agent désinfectant à une température d'environ 15°C.
- Les postes VI et VII sont des postes d'immersion dans une cuve d'immersion 9 remplie d'un bain de rinçage et de refroidissement renfermant de l'eau glacée à 2 à 4°C.
- Les postes VIII et IX sont des postes d'essorage.
- Le poste X est un poste de vidange des paniers perforés 3 et de nettoyage.

Les cuves d'immersion 7, 8, 9 sont situées dans le prolongement les unes des autres et ont la forme de secteurs annulaires de même dimension.

Le temps nécessaire au remplissage des paniers perforés est de 15 secondes et la durée d'immersion des lots de salades dans les différents bains de traitement doit être de l'ordre de 30 secondes. Il est par suite nécessaire de prévoir deux postes de traitement par cuve d'immersion 7, 8 et 9.

Cette installation fonctionne de la façon suivante :
Au niveau du poste I, le panier perforé est placé en position de remplissage représentée sur la figure 2 et est rempli d'un lot de salades prélavées, (ayant en règle générale un poids de l'ordre de 4 kg de scarole ou de frisée, 3 kg de laitue et 2 kg de mâche).

Le panier perforé 3 est ensuite placé dans la position de traitement et de lavage représentée sur la figure 3 et est plongé dans la cuve d'immersion 7 au niveau du poste II puis du poste III de sorte que le lot de salades subisse un choc thermique.

A la sortie du poste III, le panier perforé 3 est placé dans la position de transfert représentée sur la figure 4 par basculement du bras coudé 2 de façon à permettre un égouttage des salades permettant d'éviter de transférer trop de liquide de la cuve 7 à la cuve 8 puis est à nouveau placé dans la position de traitement et de lavage représentée sur la figure 2 avant d'être plongé dans la cuve 8 au niveau du poste IV puis du poste V de sorte que le lot de salades soit désinfecté.

Il est à noter que dans la cuve 8 le lot de salades est également prérefroidi compte tenu de la température de l'eau renfermée dans ce bain qui est de l'ordre de 15°C.

A la sortie de la cuve 8 le panier perforé 3 est à nouveau placé dans la position de transfert représentée sur la figure 4 pour permettre un égouttage des salades puis est à nouveau placé dans la position de traitement et de lavage représentée sur la figure 3 avant d'être plongé dans la cuve 9 de sorte que le lot de salades soit rincé et refroidi par l'eau glacée renfermée dans ce bain.

Il est à noter qu'au cours de son traitement au niveau des postes II à VII, le panier perforé 3 est constamment animé d'un mouvement de rotation autour de son axe à une vitesse qui peut être différente selon les cuves 7, 8 ou 9.

A la sortie de la cuve d'immersion 9, le panier perforé 3 est placé dans la position d'essorage et de vidange représentée sur la figure 5 et transféré au poste VIII en poursuivant sa rotation de façon à amorcer l'essorage des salades en les répartissant à la périphérie du panier.

A la sortie du poste IX, le panier perforé 3 est encore une fois placé dans la position d'essorage et de vidange représentée sur la figure 5 et transféré au poste X pour sa vidange finale.

Il ne reste alors plus qu'à replacer ce panier 3 dans la position de remplissage représentée sur la figure 2 et à le remplir d'un nouveau lot de salades au niveau du poste 1 de sorte que le cycle puisse se poursuivre.

## Revendications

1. Installation adaptée au traitement en continu de lots de salades ou autres végétaux frais râpés ou coupés prélavés avant leur conditionnement, en particulier en sachets,
**caractérisée en ce qu'**
elle comporte :
- une colonne rotative (1) médiane portant un ensemble de bras basculants (2) uniformément répartis sur sa périphérie, s'étendant radialement à partir de celle-ci, et équipés chacun, à leur extrémité libre, d'un support (5) pivotant autour d'un axe (4) essentiellement perpendiculaire à son axe longitudinal et portant un panier perforé (3) essentiellement cylindrique ou conique ayant une ouverture frontale ou latérale destiné à recevoir un lot de salades à traiter, ce panier perforé (3) étant monté à rotation autour de son axe (xx'), et
- un ensemble de postes de traitement (I à X) uniformément répartis selon une disposition annulaire autour de la colonne rotative médiane (1), au droit des paniers perforés (3) et destinés à être associés chacun à l'un de ces paniers (3) respectifs,
- la colonne rotative médiane (1) étant animée d'un mouvement pas à pas de façon à permettre de transférer en continu chacun des paniers perforés (3) d'un poste de traitement à un autre.

2. Installation selon la revendication 1,
**caractérisée en ce que**
les postes de traitement comportent un poste de remplissage des paniers (I), une série de postes d'immersion (II à VII) constitués chacun par une cuve d'immersion (7, 8, 9) renfermant un bain de traitement ou de lavage, au moins un poste d'essorage (VIII, IX) et un poste de vidange et de nettoyage (X).

3. Installation selon la revendication 2,
**caractérisée en ce que**
la série de bains de traitement ou de lavage comporte un bain de choc thermique constitué par de l'eau, le cas échéant activée, à une température comprise entre 40 et 60°C et/ou un bain désinfectant constitué par une solution aqueuse renfermant un agent désinfectant, de préférence à une température d'environ 15°C et/ou un bain de rinçage et de refroidissement renfermant de l'eau glacée à environ 2 à 4°C.

4. Procédé de traitement en continu de lots de salades ou autres végétaux frais râpés ou coupés prélavés avant leur conditionnement, en particulier en sachets, dans une installation selon les revendications 1 et 2 ou 1, 2 et 3,
**caractérisé par**
la succession des étapes suivantes :
- on introduit chaque lot de salades dans l'un des paniers perforés (3) de l'installation,
- on plonge successivement le panier perforé (3) ainsi garni dans les bains de traitement ou de lavage en le faisant tourner autour de son axe (xx') et,
- après avoir sorti le panier perforé (3) du dernier bain de traitement ou de lavage, on essore les salades renfermées dans celui-ci en poursuivant sa rotation avant de les extraire en vue de leur conditionnement.

5. Procédé selon la revendication 4,
**caractérisé en ce que**
l'on plonge le panier perforé (3) rempli de salades dans chacun des bains de traitement ou de lavage pendant 20 à 40 secondes.

6. Procédé selon l'une quelconque des revendications 4 et 5,
**caractérisé en ce qu'**
avant de transférer le panier perforé (3) rempli de salades d'un bain de traitement ou de lavage à un autre, on soumet les salades à une étape d'égouttage.

7. Procédé selon l'une quelconque des revendications 4 à 6,
**caractérisé en ce qu'**
avant de plonger le panier perforé (3) rempli de salades dans les bains de traitement ou de lavage successifs, on l'oriente de sorte que son axe de rotation (xx') soit essentiellement horizontal.

8. Procédé selon l'une quelconque des revendications 4 à 7,
**caractérisé en ce que**
l'on met en oeuvre l'étape d'essorage des salades en deux temps, à savoir d'une part un premier temps pendant lequel on oriente le panier perforé (3) de sorte que son axe de rotation (xx') soit essentiellement vertical pour permettre de répartir les salades à sa périphérie et d'autre part un second temps pendant lequel on oriente le panier perforé (3) de sorte que son axe de rotation (xx') soit essentiellement horizontal.

9. Procédé selon l'une quelconque des revendications 4 à 8,
**caractérisée en ce que**
chaque panier perforé (3) reste environ 15 secondes au droit de chaque poste de traitement (I à X).

## Claims

1. Installation designed for continuously processing batches of lettuces or other pre-washed fresh, grated or chopped vegetables prior to packaging them, in particular in packets, **characterised in that**
it comprises:
- a central rotating column (1) bearing a set of tilting arms (2) uniformly distributed around its periphery and extending radially out from it, each of which is equipped at its free end with a support (5) pivoting about an axis (4) essentially perpendicular to its longitudinal axis and supporting an essentially cylindrical or conical perforated basket (3) with a front or side opening designed to receive a batch of lettuces to be processed, which perforated basket (3) is mounted so as to rotate about its axis (xx'), and
- a series of processing stations (I to X) uniformly distributed in an annular arrangement about the central rotating column (1) in line with the perforated baskets (3) and each designed to co-operate with one of these respective baskets (3),
- the central rotating column (1) being driven in a step by step movement to enable each of the perforated baskets (3) to be continuously transferred from one processing station to another.

2. Installation as claimed in claim 1,
**characterised in that**
the processing stations comprise a station for filling the baskets (I), a series of dipping stations (II to VII) each comprising an immersion tank (7, 8, 9) containing a treatment or washing bath, at least one drying station (VIII, IX) and a draining and cleaning station (X).

3. Installation as claimed in claim 2,
**characterised in that**
the series of treatment or washing baths comprises a thermal shock bath containing water, which may or may not be activated, at a temperature in the range of between 40 and 60°C and/or a disinfectant bath comprising an aqueous solution containing a disinfectant, preferably at a temperature of approximately 15°C and/or a rinsing and cooling bath containing water chilled to approximately 2 to 4°C.

4. Method of continuously processing batches of lettuces or other pre-washed fresh, grated or chopped vegetables prior to packaging them, in particular in packets, in an installation as claimed in claims 1 and 2 or 1, 2 and 3,
**characterised by**
the series of steps as follows:
- each batch of lettuces is introduced into one of the perforated baskets (3) of the installation,
- the perforated basket (3) thus filled is successively immersed in the treatment or washing baths by rotating it about its axis (xx'), and
- once the perforated basket (3) has left the last treatment or washing bath, the lettuces contained in it are dried as it continues to rotate, before removing them in readiness for packaging.

5. Method as claimed in claim 4,
**characterised in that**
the perforated basket (3) filled with lettuces is immersed in each of the treatment or washing baths for 20 to 40 seconds.

6. Method as claimed in any one of claims 4 and 5,
**characterised in that**
before transferring the perforated basket (3) filled with lettuces from one treatment or washing bath to another, the lettuces are subjected to a draining step.

7. Method as claimed in any one of claims 4 to 6,
**characterised in that**
before immersing the perforated basket (3) filled with lettuces in the successive treatment or washing baths, it is oriented so that its axis of rotation (xx') is essentially horizontal.

8. Method as claimed in any one of claims 4 to 7,
**characterised in that**
the step of drying the lettuces is run at two different times, namely a first time during which the perforated basket (3) is oriented so that its axis of rotation (xx') is essentially vertical to enable the lettuces to be distributed around its periphery on the one hand, and a second time during which the perforated basket (3) is oriented so that its axis of rotation (xx') is essentially horizontal on the other hand.

9. Method as claimed in any one of claims 4 to 8,
**characterised in that**
each perforated basket (3) remains in line with each processing station (I to X) for approximately 15 seconds.

## Patentansprüche

1. Vorrichtung zur kontinuierlichen Behandlung von geraspelten oder geschnittenen vorgewaschenen Salat- oder anderen Frischgemüsechargen vor ihrem Verpacken insbesondere in Beutel,
**dadurch gekennzeichnet, daß** sie aufweist:
- eine zentrale Drehsäule (1), die mehrere gleichmäßig entlang ihres Umfangs verteilte und sich von diesem aus radial erstreckende schwenkbare Arme (2) trägt, von denen jeder an seinem freien Ende mit einem Träger (5) versehen ist, der sich um eine Achse (4) dreht, die im wesentlichen senkrecht zu seiner Längsachse ist, und der einen im wesentlichen zylindrischen oder konischen Siebkorb (3) mit einer vorderen oder seitlichen Öffnung trägt, der zur Aufnahme einer zu behandelnden Salatcharge dient, wobei dieser Siebkorb (3) um seine Achse (xx') drehbar angebracht ist, und
- mehrere Behandlungsstationen (I bis X), die an den Siebkörben (3) in einer ringförmigen Anordnung gleichmäßig um die zentrale Drehsäule (1) verteilt sind und denen jeweils einer dieser Körbe (3) zugeteilt wird,
- wobei die zentrale Drehsäule (1) in eine schrittweise Bewegung versetzt wird, um kontinuierlich eine Übertragung jedes der Siebkörbe (3) von einer Behandlungsstation zu einer anderen zu erlauben.

2. Vorrichtung nach Anspruch 1, **dadurch gekennzeichnet, daß** die Behandlungsstationen aufweisen: eine Füllstation (I) zum Füllen der Körbe, mehrere Tauchstationen (II bis VII), von denen jede aus einem ein Behandlungs- oder Waschbad enthaltenden Tauchbehälter (7,8,9) besteht, mindestens eine Schleuderstation (VIII,IX) und eine Entleerungs- und Reinigungsstation (X).

3. Vorrichtung nach Anspruch 2, **dadurch gekennzeichnet, daß** die mehreren Behandlungs- oder Waschbäder aufweisen: ein Wärmeschockbad, das aus Wasser, gegebenenfalls aktiviert, einer Temperatur zwischen 40 und 60°C besteht, und/oder ein Desinfektionsbad, das aus einer ein Desinfektionsmittel enthaltenden wäßrigen Lösung vorzugsweise einer Temperatur von ungefähr 15°C besteht, und/oder ein Spül- und Kühlbad, das Eiswasser von ungefähr 2 bis 4°C enthält.

4. Verfahren zur kontinuierlichen Behandlung von geraspelten oder geschnittenen vorgewaschenen Salat- oder anderen Frischgemüsechargen vor ihrem Verpacken insbesondere in Beutel in einer Vorrichtung nach Anspruch 1 und 2 oder 1, 2 und 3, **gekennzeichnet durch** die folgenden Schritte:
- Laden jeder Salatcharge in einen der Siebkörbe (3) der Vorrichtung,
- Eintauchen des auf diese Weise beladenen Siebkorbs (3) der Reihe nach in die Behandlungs- oder Waschbäder unter Rotation des Siebkorbs um seine Achse (xx') und
- nach Herausnehmen des Siebkorbs (3) aus dem letzten Behandlungs- oder Waschbad Schleudern der darin enthaltenen Salate unter Fortführung der Rotation des Siebkorbs vor Entnahme der Salate zum Zwecke ihres Verpackens.

5. Verfahren nach Anspruch 4, **gekennzeichnet durch** Eintauchen des mit Salaten gefüllten Siebkorbs (3) in jedes der Behandlungs- oder Waschbäder während 20 bis 40 Sekunden.

6. Verfahren nach einem der Ansprüche 4 und 5, **gekennzeichnet durch** Unterziehen der Salate einem Abtropfschritt vor Übertragen des mit Salaten gefüllten Siebkorbs (3) von einem Behandlungs- oder Waschbad zu einem anderen.

7. Verfahren nach einem der Ansprüche 4 bis 6, **gekennzeichnet durch** Ausrichtung des Siebkorbs (3) derart, daß seine Drehachse (xx') im wesentlichen horizontal ist, vor Eintauchen des mit Salaten gefüllten Siebkorbs (3) in die aufeinanderfolgenden Behandlungs- oder Waschbäder.

8. Verfahren nach einem der Ansprüche 4 bis 7, **gekennzeichnet durch** Durchführen des Schritts des Schleuderns der Salate in zwei Zeiten, nämlich einerseits einer ersten Zeit, während welcher der Siebkorb (3) so ausgerichtet ist, daß seine Drehachse (xx') im wesentlichen vertikal ist, um die Salate zu seinem Rand hin zu verteilen, und andererseits während einer zweiten Zeit, in welcher der Siebkorb (3) so ausgerichtet ist, daß seine Drehachse (xx') im wesentlichen horizontal ist.

9. Verfahren nach einem der Ansprüche 4 bis 8, **dadurch gekennzeichnet, daß** jeder Siebkorb (3) ungefähr 15 Sekunden an jeder Behandlungsstation (I bis X) bleibt.
